# EUROPÄISCHE PATENTSCHRIFT

(11) **EP 0 966 404 B1**
(45) Veröffentlichungstag und Bekanntmachung des Hinweises auf die Patenterteilung: **25.11.2009**
(21) Anmeldenummer: 98907940.5
(22) Anmeldetag: 13.01.1998
(51) Int. Cl.: C02F 3/02, C02F 3/12, C02F 1/74

(54) **VERFAHREN UND VORRICHTUNG ZUM EINTRAG VON SAUERSTOFF IN WASSER ODER WÄSSRIGEN LÖSUNGEN**
METHOD AND DEVICE FOR INTRODUCING OXYGEN INTO WATER OR AQUEOUS SOLUTIONS
PROCEDE ET DISPOSITIF POUR INTRODUIRE DE L'OXYGENE DANS DE L'EAU OU DANS DES SOLUTIONS AQUEUSES

(30) Priorität: 25.02.1997 DE 19707425
(43) Veröffentlichungstag der Anmeldung: 29.12.1999
(73) Patentinhaber: Air Liquide Deutschland GmbH, 40235 Düsseldorf (DE); Messer Group GmbH, 65843 Sulzbach (DE)
(72) Erfinder: DONATH, Sabine, D-46147 Oberhausen (DE); HERMANS, Monica, D-41470 Neuss (DE)
(74) Vertreter: Kahlhöfer, Hermann
(86) Internationale Anmeldenummer: PCT/EP1998/000150
(87) Internationale Veröffentlichungsnummer: WO 1998/038135

(56) Entgegenhaltungen:
- EP-A- 0 302 708
- US-A- 4 267 052
- US-A- 5 599 452

## Beschreibung

Die Erfindung betrifft ein Verfahren und eine Vorrichtung zum Eintrag von Sauerstoff in Wasser oder wässrigen Lösungen gemäß dem Oberbegriff des Anspruchs 1 und des Anspruchs 12.

In vielen Bereichen der Aufbereitung von Wasser oder wässrigen Lösungen ist es erforderlich oder vorteilhaft, zusätzlich Sauerstoff in das wässrige System einzubringen. Verfahren zur Aufbereitung von Wasser oder wässrigen Lösungen sind zum Beispiel Verfahren in der Abwasserbehandlung, der Abwasserreinigung, der Trinkwasseraufbereitung, im Gewässerschutz oder bei der Fischzucht. Für eine wirtschaftliche Verfahrensweise der Sauerstoffeinbringung muß der Sauerstoffeintrag, daß bedeutet das Verhältnis zwischen dem gelösten Anteil an Sauerstoff zum zugeführten Anteil an Sauerstoff möglichst hoch sein, aber der energetische Aufwand zum Lösen des Sauerstoffs muß dabei möglichst gering sein.

So wird bei Verfahren zur Abwasserreinigung in Kläranlagen mit dem sogenannten Belebtschlammverfahren, bei dem die unterschiedlichen Wasserinhaltsstoffe in einer ersten Verfahrensstufe, der sogenannten Belebung, von im Abwasser schwimmenden Mikroorganismen (Bakterien) in einem Belebungsbecken veratmet beziehungsweise teilweise zum Aufbau neuer Biomasse verwendet werden, die wässrige Lösung (Abwasser) belüftet wird und teilweise wird zusätzlich Sauerstoff zugeführt. Das Einbringen der Luft oder des Sauerstoffs erfolgt durch Belüftungseinrichtungen wie Kerzenbelüfter oder Tellerbelüfter. Derartige Kläranlagen und Verfahren sind zum Beispiel beschrieben in "Abwassertechnik", Hosang und Bischof, 9. Auflage, Verlag B.G. Teubner, 1989. Durch Verschärfung von gesetzlichen Anforderungen an die Abwasserreinigung und gegebenenfalls durch Zunahme der Schmutzfracht des Abwassers wird oft eine Erweiterung und Verbesserung bestehender Kläranlagen erforderlich, was dazu führt, daß oftmals ein zusätzlicher Eintrag von Sauerstoff notwendig wird. Dies kann durch herkömmliche Belüftungseinrichtungen, zum Beispiel Kerzenbelüfter oder Tellerbelüfter, einen Oxidator sowie durch Begasungsschläuche oder Injektoren geschehen. Unter dem Begriff "Oxidator" ist hier ein wasserdurchströmter Druckbehälter zu verstehen; der Begriff "Begasungsschlauch" wird hier für einen perforierten Schlauch verwendet; der Begrifff "Injektor" bedeutet eine Vorrichtung, welche im Grundsatz aus einer Pumpe, einem Venturirohr und einer Mischstrecke, welche beispielsweise mit Mischdüsen und Mischrohren ausgerüstet ist, besteht.

US 4,267,052, EP 0 302 708 und US 5,599,452 offenbaren Verfahren bzw. Vorrichtungen zur Eintragung von Sauerstoff oder eines sauerstoffhaltigen Gases, wobei eine Venturidüse und ein perforiertes Rohr jeweils in Reihe verschaltet sind, so dass das Verhältnis der Volumenströme von dem über den Injektor zugegebenen Sauerstoffeintrag zu dem über das Rohr zugegebenen Sauerstoffeintrag stets 1:1 beträgt.

Der Erfindung liegt die Aufgabe zugrunde, das eingangs genannte Verfahren derart zu verbessern, daß der Sauerstoffeintrag maximiert wird und gleichzeitig der zusätzliche Energieaufwand relativ gering ist.

Diese Aufgabe wird dadurch gelöst, daß Sauerstoff oder ein sauerstoffhaltiges Gas kontinuierlich oder zeitweise durch einen Injektor und gleichzeitig mindestens einen Begasungsschlauch dem Wasser oder wässrigen Lösung zugegeben werden. Überraschenderweise zeigte es sich, daß der durch diese Kombination erzielte technische Vorteil größer ist, als der alternative Einsatz der einzelnen Vorrichtungen (Injektor oder Begasungsschlauch). Diese synergetische Effekt ist überraschend, da der Gesamtwirkungsgrad deutlich über dem der Teilsysteme liegt. Der zusätzliche Energiebedarf ist dabei minimal und der wirtschaftlich sinnvolle Regelbereich zwischen maximaler und minimaler Sauerstoffzufuhr ist relativ groß. Der optimale Sauerstoffgehalt und die optimale Menge an zuzuführendem Sauerstoff sind von dem zu behandelten Wasser oder wässrigen Lösung und der speziellen Verfahrensweise der Anlage abhängig, worin das beanspruchte Verfahren eingesetzt wird und können für die jeweiligen Randbedingungen durch wenige, einfache Versuche ermittelt werden. Ein weiterer Vorteil ist es, daß die Begasungsschläuche und Injektoren nur relativ geringe Investitionskosten verursachen.

Als sauerstoffhaltiges Gas wird vorzugsweise reiner Sauerstoff eingesetzt. Unter dem Begriff "reiner Sauerstoff' ist hier Sauerstoff gemeint der eine Mindestreinheit von ca. 80 Vol.-% aufweist. Es kann zum Beispiel technischer Sauerstoff, welcher durch Verflüssigung der Luft hergestellt wird und typisch den

Reinheitsspezifikation "Sauerstoff 2.0" (Mindestreinheit 99 Vol.-%) oder "Sauerstoff 2.5" (Mindestreinheit 99,5 Vol.-%) erfüllt, verwendet werden. Ein Einsatz derartiger, technisch reiner Sauerstoffgase ist dann möglich, wenn sich damit eine wirtschaftliche Verfahrensweise erreichen läßt.

Nach der Erfindung beträgt das Verhältnis des Volumenströme von dem über den Injektor zugegebenen Sauerstoff oder sauerstoffhaltigen Gas zu dem über den Begasungsschlauch zugegebenen Sauerstoff oder sauerstoffhaltigen Gas 10 zu 1bis 1 zu 10.

Es ist nach der Erfindung vorgesehen, daß der Volumenstroms von dem über den Injektor zugegebenen Sauerstoff oder sauerstoffhaltigen Gas von 0,01 bis 0,5 Nm³/h pro m³ Wasser oder wässriger Lösung beträgt und/oder daß der Volumenstrom von dem über den Begasungsschlauch zugegebenen Sauerstoff oder sauerstoffhaltigen Gas von 0,01 bis 0,4 Nm³/h pro m³ Wasser oder wässriger Lösung beträgt.

Nach der Erfindung wird das sauerstoffhaltige Gas oder Sauerstoff dem Abwasser in einer Anlage zur biologischen Abwasserreinigung in der Belebungsstufe zugeführt. Vorzugsweise werden der Injektor und der Begasungsschlauch dann im aeroben Bereich am Boden des Belebungsbeckens der Anlage zur biologischen Abwasserreinigung angeordnet.

Erfindungsgemäß strömt das im Injektor mit Sauerstoff angereicherte Wasser über ein oder mehrere Mischdüsen in das Becken mit dem sauerstoffärmeren Wasser ein und/oder das mit Sauerstoff angereicherte Wasser wird über ein oder mehrere Mischrohre mit dem sauerstoffärmeren Wasser des Beckens vermischt.

Das sauerstoffhaltige Gas oder reiner Sauerstoff kann über alle üblichen Versorgungsmethoden, zum Beispiel Flüssig-Speichertank, On-site-Verfahren oder eine Rohrleitung eines Verbundnetzes, zugeführt werden. Mit dem Begriff "On-site-Verfahren" sind hier Verfahren gemeint, bei denen Sauerstoff direkt am Ort des Sauerstoffverbrauchs aus der Umgebungsluft hergestellt wird. Die Versorgung über eine Rohrleitung eines Verbundnetzes ist bevorzugt, denn sie ermöglicht einen relativ hohe Betriebssicherheit und große Versorgungssicherheit bei einem relativ geringen technischen Aufwand und kleinem Platzbedarf. Der Anschluß der Sauerstoffversorgung an die Vorrichtung zum Eintrag des Sauerstoffs in das Wasser bzw. wässrige Lösung kann vorteilhaft mit einem Elastomer-Schlauch erfolgen, um die Montage zu vereinfachen.

Für bestimmte Anwendungsfälle ist es vorteilhaft, daß das sauerstoffhaltige Gas oder reiner Sauerstoff nur zeitweise, vorzugsweise jedoch für 5 bis 50 Minuten pro Stunde, die konventionelle Belüftung ersetzt. Vorzugsweise ersetzt das sauerstoffhaltige Gas oder Sauerstoff die konventionelle Belüftung einer Anlage zur biologischen Abwasserreinigung bei einer erhöhten hydraulischen Belastung, welche beispielsweise als Folge eines Regenereignisses auftreten kann.

Es ist nach der Erfindung ebenso vorgesehen, daß das sauerstoffhaltig Gas oder Sauerstoff zusätzlich zu der konventionellen Belüftung bei einer höheren Schadstoffbelastung des Abwassers oder bei einem erhöhten Energiebedarf der Anlage zu biologischen Abwasserreinigung dem Abwasser zugeführt wird.

Die der Erfindung zugrunde liegende Aufgabe wird ferner durch eine Vorrichtung gelöst, bei der die Zufuhr des Sauerstoffs oder ein sauerstoffhaltigen Gases durch einen Injektor und gleichzeitig durch mindestens einen Begasungsschlauch erfolgt, wobei dem Venturirohr des Injektors zwei konische Trichter mit gelochtem und/oder geschlitztem Mittelstück und einer an dem Mittelstück angeordneten Manschette zur Gaszufuhr zugeordnet sind. Die Manschette weist vorteilhaft eine Tülle oder einen Flansch zum Anschluß eines Schlauches oder einer Rohrleitung zur Zufuhr des Sauerstoffs auf.

Es ist nach der Erfindung ferner vorgesehen, anstelle des beschriebenen Venturirohres einen Flüssigkeitsstrahlgasverdichter einzusetzen, der das Gas atmosphärisch oder bei geringem Überdruck, beispielsweise bei einem Überdruck bis zu 100 mbar, ansaugen kann. Unter dem Begriff "Flüssigkeitsstrahlgasverdichter" sind hier Strahlpumpen zum Fördern und Verdichten von Gasen bei gleichzeitiger intensiver Mischung mit der Treibflüssigkeit zu verstehen. Sie bestehen aus einem Kopfteil, auswechselbarer Treibdüse mit Drallkörper und Diffusor.

Der Begasungsschlauch besteht vorzugsweise aus einem perforierten Elastomer-Schlauch, bei dem die Öffnungen zum Ausströmen des sauerstoffhaltigen Gases oder Sauerstoffs erst ab einem Überdruck im Innern des Schlauches von ca. 0,2 bis 0,5 bar gebildet werden. Dies hat den Vorteil, daß die Öffnungen auch dann, wenn kein sauerstoffhaltiges Gas oder Sauerstoff durch die Öffnungen ausströmt, nicht verstopfen können.

Erfindungsgemäß ist nach dem Injektor eine Rohrleitung angeordnet, an der eine oder mehrere Mischdüsen und/oder ein oder mehrere Mischrohre angeordnet sind. Dieser Rohrleitung kann vorteilhaft eine weitere Rohrleitung als Absorptionsstrecke zur Erhöhung des Sauerstoffeintrags vorgeschaltet sein.

Nach der Erfindung ist es vorgesehen, daß in der Rohrleitung nach dem Injektor zusätzliche Einbauten oder Querschnittsänderungen des Rohrinnendurchmessers angeordnet sind zur Erhöhung der Turbulenz im Strömungsprofil. Dadurch wird eine verbesserte Dispersion bzw. Feinstverteilung der Gasblasen bewirkt. Erfindungsgemäß kann ferner in der Rohrleitung nach dem Injektor auch ein statischer Mischer angeordnet sein zur Erhöhung der Turbulenz im Strömungsprofil. Der Mischer weist dreidimensionalen Einbauten auf, um die Strömung so zu verändern, daß Sauerstoffblasen stärker zerteilt werden.

### Beispiele:

In einem Testbecken mit Reinwasser und bei einer Wassertiefe von 2m mußten zur Erzielung einer gleichen Menge an gelöstem Sauerstoff bei ausschließlicher Verwendung von Begasungsschläuchen 244 kg/h Sauerstoff und bei ausschließlicher Verwendung eines Injektors 222 kg/h Sauerstoff eingetragen werden, während bei kombiniertem Einsatz von Begasungsschläuchen und Injektor die einzutragende Menge an Sauerstoff nur 200 kg/h betrug.

Bei Versuchen in Kläranlagen, zum Beispiel in einer Kläranlage für 12000 Einwohnergleichwerte (EWG) mit einer Wassertiefe von 2,5m, traten die Vorteile der erfinderischen Kombination noch deutlicher hervor. So wurden für die gleiche Menge an gelöstem Sauerstoff bei ausschließlicher Verwendung von Begasungsschläuchen 304 kg/h Sauerstoff und bei ausschließlicher Verwendung eines Injektors 162 kg/h Sauerstoff benötigt, aber die gleiche Menge an gelöstem Sauerstoff konnte bei kombinierter Verwendung von Begasungsschläuchen und Injektor durch einen Eintrag von nur 108 kg/h Sauerstoff erzielt werden.

## Patentansprüche

1. Verfahren zum Eintrag von Sauerstoff oder eines sauerstoffhaltigen Gases in Wasser oder wässrigen Lösungen bei der Aufbereitung von Wasser oder wässrigen Lösungen,
**dadurch gekennzeichnet,**
**dass** Sauerstoff oder ein sauerstoffhaltiges Gas kontinuierlich oder zeitweise durch einen Injektor und gleichzeitig durch mindestens einen elastomeren Begasungsschlauch dem Wasser oder wässrigen Lösung zugegeben werden, wobei vorgesehen ist, dass das Verhältnis der Volumenströme von dem über den Injektor zugegebenen Sauerstoff oder sauerstoffhaltigen Gas zu dem über den Begasungsschlauch zugegebenen Sauerstoff oder sauerstoffhaltigen Gas 1 zu 10 bis 10 zu 1 beträgt.

2. Verfahren nach Anspruch 1,
**dadurch gekennzeichnet,**
**dass** als sauerstoffhaltiges Gas reiner Sauerstoff verwendet wird.

3. Verfahren nach einem der Ansprüche 1 bis 2,
**dadurch gekennzeichnet,**
**dass** der Volumenstrom von dem über den Injektor zugegebenen Sauerstoff oder sauerstoffhaltigen Gas von 0,01 bis 0,5 Nm³/h pro m³ Wasser oder wässriger Lösung beträgt.

4. Verfahren nach einem der Ansprüche 1 bis 3,
**dadurch gekennzeichnet,**
**dass** der Volumenstrom von dem über den Begasungsschlauch zugegebenen Sauerstoff oder sauerstoffhaltigen Gas von 0,01 bis 0,4 Nm³/h pro m³ Wasser oder wässriger Lösung beträgt.

5. Verfahren nach einem der Ansprüche 1 bis 4,
**dadurch gekennzeichnet,**
**dass** das sauerstoffhaltige Gas oder Sauerstoff dem Abwasser in einer Anlage zur biologischen Abwasserreinigung in der Belebungsstufe zugeführt wird.

6. Verfahren nach Anspruch 5,
**dadurch gekennzeichnet,**
**dass** das im Injektor mit Sauerstoff angereicherte Wasser über ein oder mehrere Mischdüsen in das Becken mit dem sauerstoffärmeren Wasser einströmt.

7. Verfahren nach Anspruch 5 oder 6,
**dadurch gekennzeichnet,**
**dass** das mit Sauerstoff angereicherte Wasser über ein oder mehrere Mischrohre mit dem sauerstoffärmeren Wasser des Beckens vermischt wird.

8. Verfahren nach einem der Ansprüche 5 bis 7,
**dadurch gekennzeichnet,**
**dass** das sauerstoffhaltige Gas oder Sauerstoff über eine Rohrleitung eines Verbundnetzes dem Wasser oder wässrigen Lösung zugeführt wird.

9. Verfahren nach einem der Ansprüche 5 bis 8,
**dadurch gekennzeichnet,**
**dass** das sauerstoffhaltige Gas oder Sauerstoff für eine Zeitdauer von 5 bis 50 Minuten pro Stunde die konventionelle Belüftung ersetzt.

10. Verfahren nach Anspruch 5 oder 9,
**dadurch gekennzeichnet,**
**dass** das sauerstoffhaltige Gas oder Sauerstoff bei erhöhter hydraulischer Belastung der Anlage zur biologischen Abwasserreinigung die konventionelle Belüftung ersetzt.

11. Verfahren nach einem der Ansprüche 8 bis 9,
**dadurch gekennzeichnet,**
**dass** das sauerstoffhaltige Gas oder Sauerstoff zusätzlich zu der konventionellen Belüftung bei einer höheren Schadstoffbelastung des Abwassers oder bei einem erhöhten Energiebedarf der Anlage zu biologischen Abwasserreinigung dem Abwasser zugeführt wird.

12. Vorrichtung zur Durchführung des Verfahrens nach einem der Ansprüche 1 bis 11,
**dadurch gekennzeichnet,**
**dass** die Zufuhr des Sauerstoffs oder eines sauerstoffhaltigen Gases durch einen Injektor und gleichzeitig durch mindestens einen elastomeren Begasungsschlauch erfolgt, wobei dem Venturirohr des Injektors zwei konische Trichter mit gelochtem und/oder geschlitztem Mittelstück und eine an dem Mittelstück angeordnete Manschette zur Zufuhr des sauerstoffhaltigen Gases oder Sauerstoffs zugeordnet sind.

13. Vorrichtung zur Durchführung des Verfahrens nach einem der Ansprüche 1 bis 11,
**dadurch gekennzeichnet,**
**dass** die Zufuhr des Sauerstoffs oder eines sauerstoffhaltigen Gases durch einen Injektor und gleichzeitig durch mindestens einen elastomeren Begasungsschlauch erfolgt, wobei der Injektor einen Flüssigkeitsstrahlgasverdichter aufweist.

14. Vorrichtung nach Anspruch 12 oder 13,
**dadurch gekennzeichnet,**
**dass** der Begasungsschlauch aus einem perforierten Elastomer-Schlauch besteht.

15. Vorrichtung nach einem der Ansprüche 12 bis 14,
**dadurch gekennzeichnet,**
**dass** dem Injektor und/oder Begasungsschlauch eine Rohrleitung eines Verbundnetzes zur Versorgung mit einem sauerstoffhaltigen Gas oder Sauerstoff zugeordnet ist.

16. Vorrichtung nach einem der Ansprüche 12 bis 15,
**dadurch gekennzeichnet,**
**dass** nach dem Injektor eine Rohrleitung angeordnet ist, an der eine oder mehrere Mischdüsen und/oder ein oder mehrere Mischrohre angeordnet sind.

17. Vorrichtung nach einem der Ansprüche 12 bis 16,
**dadurch gekennzeichnet,**
**dass** in der Rohrleitung nach dem Injektor zusätzliche Einbauten oder Querschnittsänderungen des Rohrinnendurchmessers angeordnet sind zur Erhöhung der Turbulenz im Strömungsprofil.

18. Vorrichtung nach einem der Ansprüche 12 bis 17,
**dadurch gekennzeichnet,**
**dass** in der Rohrleitung nach dem injektor ein statischer Mischer angeordnet ist.

19. Vorrichtung nach einem der Ansprüche 12 bis 18,
**dadurch gekennzeichnet,**
**dass** der Injektor und der Begasungsschlauch im aeroben Bereich am Boden des Belebungsbeckens einer Anlage zur biologischen Abwasserreinigung angeordnet sind.

## Claims

1. Process for transferring oxygen or an oxygen-containing gas into water or aqueous solutions in the treatment of water or aqueous solutions, **characterized in that** oxygen or an oxygen-containing gas is added to the water or aqueous solution continuously or at intervals through an injector and simultaneously through at least one elastomeric tube sparger, it being provided that the ratio of the volumetric flow rates of the oxygen or oxygen-containing gas added via the injector to the oxygen or oxygen-containing gas added via the tube sparger is 1:10 to 10:1.

2. Process according to Claim 1, **characterized in that** the oxygen-containing gas used is pure oxygen.

3. Process according to one of Claims 1 to 2, **characterized in that** the volumetric flow rate of the oxygen or oxygen-containing gas added via the injector is 0.01 to 0.5 m3 (S.T.P.)/h per m3 of water or aqueous solution.

4. Process according to one of Claims 1 to 3, **characterized in that** the volumetric flow rate of the oxygen or oxygen-containing gas added via the tube sparger is 0.01 to 0.4 m3 (S.T.P.)/h per m3 of water or aqueous solution.

5. Process according to one of Claims 1 to 4, **characterized in that** the oxygen-containing gas or oxygen is fed to the wastewater in the activation stage in a biological wastewater purification plant.

6. Process according to Claim 5, **characterized in that** the water enriched with oxygen in the injector flows via one or more mixing nozzles into the tank containing the water lower in oxygen.

7. Process according to Claim 5 or 6, **characterized in that** the oxygen-enriched water is mixed with the tank water lower in oxygen via one or more mixing tubes.

8. Process according to one of Claims 5 to 7, **characterized in that** the oxygen-containing gas or oxygen is fed to the water or aqueous solution via a pipe from a network.

9. Process according to one of Claims 5 to 8, **characterized in that** the oxygen-containing gas or oxygen replaces the conventional aeration for a period of 5 to 50 minutes per hour.

10. Process according to Claim 5 or 9, **characterized in that** the oxygen-containing gas or oxygen replaces the conventional aeration in the event of an increase in hydraulic loading of the biological wastewater purification plant.

11. Process according to one of Claims 8 to 9, **characterized in that** the oxygen-containing gas or oxygen is fed to the wastewater in addition to the conventional aeration in the event of a higher pollutant loading of the wastewater or in the event of an increased energy requirement of the biological wastewater purification plant.

12. Device for carrying out the process according to one of Claims 1 to 11, **characterized in that** the oxygen or an oxygen-containing gas is fed through an injector and simultaneously through at least one elastomeric tube sparger, two conical funnels having a perforated and/or slotted middle piece and a sleeve arranged on the middle piece for feeding the oxygen-containing gas or oxygen being assigned to the Venturi tube of the injector.

13. Device for carrying out the process according to one of Claims 1 to 11, **characterized in that** the oxygen or an oxygen-containing gas is fed through an injector and simultaneously through at least one elastomeric tube sparger, the injector having a liquid jet gas compressor.

14. Device according to Claim 12 or 13, **characterized in that** the tube sparger consists of a perforated elastomer tube.

15. Device according to one of Claims 12 to 14, **characterized in that** a pipe from a network for supplying an oxygen-containing gas or oxygen is assigned to the injector and/or tube sparger.

16. Device according to one of Claims 12 to 15, **characterized in that**, downstream of the injector, a pipe is arranged on which one or more mixing nozzles and/or one or more mixing tubes are arranged.

17. Device according to one of Claims 12 to 16, **characterized in that** additional internals or changes in cross-section of the pipe inner diameter are arranged in the pipe downstream of the injector to increase the turbulence in the flow profile.

18. Device according to one of Claims 12 to 17, **characterized in that** a static mixer is arranged in the pipe downstream of the injector.

19. Device according to one of Claims 12 to 18, **characterized in that** the injector and the tube sparger are arranged in the aerobic region at the bottom of the activation tank of a biological wastewater purification plant.

## Revendications

1. Procédé pour introduire de l'oxygène ou un gaz contenant de l'oxygène dans de l'eau ou des solutions aqueuses, lors de la préparation d'eau ou de solutions aqueuses,
**caractérisé en ce que**
de l'oxygène ou un gaz contenant de l'oxygène est ajouté en continu ou temporairement par un injecteur et simultanément par au moins un tuyau de gazage en élastomère à l'eau ou à la solution aqueuse, le rapport des flux volumiques de l'oxygène ou du gaz contenant de l'oxygène ajouté par le biais de l'injecteur à l'oxygène ou au gaz contenant de l'oxygène ajouté par le biais du tuyau de gazage étant compris entre 1 à 10 et 10 à 1.

2. Procédé selon la revendication 1,
**caractérisé en ce que**
l'on utilise comme gaz contenant de l'oxygène de l'oxygène pur.

3. Procédé selon l'une quelconque des revendications 1 ou 2,
**caractérisé en ce que**
le flux volumique de l'oxygène ou du gaz contenant de l'oxygène ajouté par le biais de l'injecteur vaut de 0,01 à 0,5 Nm³/h par m³ d'eau ou de solution aqueuse.

4. Procédé selon l'une quelconque des revendications 1 à 3,
**caractérisé en ce que**
le flux volumique de l'oxygène ou du gaz contenant de l'oxygène ajouté par le biais du tuyau de gazage vaut de 0,01 à 0,4 Nm³/h par m³ d'eau ou de solution aqueuse.

5. Procédé selon l'une quelconque des revendications 1 à 4,
**caractérisé en ce que**
le gaz contenant de l'oxygène ou l'oxygène est acheminé aux eaux usées d'une installation biologique de purification des eaux usées dans l'étape d'épuration par boues activées.

6. Procédé selon la revendication 5,
**caractérisé en ce que**
l'eau enrichie en oxygène dans l'injecteur afflue par le biais d'une ou de plusieurs buses de mélange dans le bassin contenant l'eau plus pauvre en oxygène.

7. Procédé selon la revendication 5 ou 6,
**caractérisé en ce que**
l'eau enrichie en oxygène est mélangée à l'eau plus pauvre en oxygène du bassin par le biais d'un ou de plusieurs tubes de mélange.

8. Procédé selon l'une quelconque des revendications 5 à 7,
**caractérisé en ce que**
le gaz contenant de l'oxygène ou l'oxygène est acheminé par le biais d'une conduite tubulaire d'un réseau interconnecté à l'eau ou à la solution aqueuse.

9. Procédé selon l'une quelconque des revendications 5 à 8,
**caractérisé en ce que**
le gaz contenant de l'oxygène ou l'oxygène remplace pendant une période de 5 à 50 minutes par heure la ventilation conventionnelle.

10. Procédé selon la revendication 5 ou 9,
**caractérisé en ce que**
le gaz contenant de l'oxygène ou l'oxygène remplace la ventilation conventionnelle dans le cas d'une sollicitation hydraulique accrue de l'installation pour la purification biologique des eaux usées.

11. Procédé selon l'une quelconque des revendications 8 à 9,
**caractérisé en ce que**
le gaz contenant de l'oxygène ou l'oxygène est acheminé en plus de la ventilation conventionnelle dans le cas d'une sollicitation accrue en substances nocives des eaux usées ou dans le cas d'un plus grand besoin énergétique de l'installation pour la purification biologique des eaux usées.

12. Dispositif pour mettre en oeuvre le procédé selon l'une quelconque des revendications 1 à 11,
**caractérisé en ce que**
l'alimentation en oxygène ou en un gaz contenant de l'oxygène s'effectue par un injecteur et simultanément par au moins un tuyau de gazage élastomère, deux entonnoirs coniques avec un élément central perforé et/ou fendu et une manchette disposée sur l'élément central, pour l'alimentation en gaz contenant de l'oxygène ou en oxygène étant associés au tube de Venturi de l'injecteur.

13. Dispositif pour mettre en oeuvre le procédé selon l'une quelconque des revendications 1 à 11,
**caractérisé en ce que**
l'alimentation en oxygène ou en un gaz contenant de l'oxygène s'effectue par un injecteur et simultanément par au moins un tuyau de gazage élastomère, l'injecteur présentant un compresseur de gaz à jet de liquide.

14. Dispositif selon la revendication 12 ou 13,
**caractérisé en ce que**
le tuyau de gazage se compose d'un tuyau perforé en élastomère.

15. Dispositif selon l'une quelconque des revendications 12 à 14,
**caractérisé en ce que**
l'on associe à l'injecteur et/ou au tuyau de gazage une conduite tubulaire d'un réseau interconnecté pour l'alimentation en un gaz contenant de l'oxygène ou en oxygène.

16. Dispositif selon l'une quelconque des revendications 12 à 15,
**caractérisé en ce que**
l'on dispose après l'injecteur une conduite tubulaire sur laquelle une ou plusieurs buses de mélange et/ou un ou plusieurs tubes de mélange sont disposés.

17. Dispositif selon l'une quelconque des revendications 12 à 16,
**caractérisé en ce que**
l'on dispose dans la conduite tubulaire après l'injecteur des éléments insérés supplémentaires ou des modifications de section transversale du diamètre intérieur du tube, pour augmenter la turbulence dans le profil d'écoulement.

18. Dispositif selon l'une quelconque des revendications 12 à 17,
**caractérisé en ce que**
l'on dispose dans la conduite tubulaire après l'injecteur un mélangeur statique.

19. Dispositif selon l'une quelconque des revendications 12 à 18,
**caractérisé en ce que**
l'injecteur et le tuyau de gazage sont disposés dans la zone aérobie au fond du bassin d'épuration par boues activées d'une installation de purification biologique des eaux usées.
